# FASCICULE DE BREVET EUROPEEN

(11) **EP 2 347 933 B1**
(45) Date de publication et mention de la délivrance du brevet: **14.06.2017**
(21) Numéro de dépôt: 11151304.0
(22) Date de dépôt: 18.01.2011
(51) Int. Cl.: B60Q 1/00, B60Q 1/12, B60R 1/00, B60R 11/04, G08G 1/16

(54) **PROCÉDÉ ET DISPOSITIF D'ÉCLAIRAGE DE ROUTE ET DE DÉTECTION PAR CAMÉRA POUR UN VÉHICULE AUTOMOBILE**
VERFAHREN UND GERÄT FÜR STRASSENBELEUCHTUNG UND KAMERAERKENNUNG FÜR EIN KRAFTFAHRZEUG
METHOD AND APPARATUS FOR ROAD LIGHTING AND CAMERA DETECTION FOR A MOTOR VEHICLE

(30) Priorité: 22.01.2010 FR 1050433
(43) Date de publication de la demande: 27.07.2011
(73) Titulaire: VALEO VISION, 93012 Bobigny (FR)
(72) Inventeur: Laliron, Anne, 78760 Jouars Pontchartrain (FR); Robert, Caroline, 75017 Paris (FR)

(56) Documents cités:
- EP-A1- 1 500 557
- DE-A1- 19 950 033
- FR-A1- 2 785 434
- FR-A1- 2 898 092
- JP-A- 10 264 723
- JP-A- 2005 088 630

## Description

L'invention concerne notamment un procédé de détection pour un véhicule automobile.

Dans le domaine de l'aide à la conduite, plusieurs fonctions sont apparues. Elles requièrent, comme capteurs, des caméras capables d'analyser la scène et ces fonctions apportent ainsi une aide à la prise de décision ou bien permettent une automatisation de certaines tâches jusque-là laissées à la charge du conducteur du véhicule.

On peut citer par exemple, de manière non exhaustive, la fonction automatisation faisceaux code- route, les fonctions d'aide au parking, les fonctions d'éclairages adaptatifs, la détection de lignes au sol.

Dans ces différents cas et pour chaque application, le champ de vision de la caméra est adapté à la situation.

Néanmoins, dans un souci croissant de réduction des coûts et de standardisation, une mise en commun des capteurs est souhaitée par les constructeurs automobiles. Cette multifonctionnalité implique des compromis en terme de champ de vue. Le champ de vue retenu est le meilleur compromis entre les besoins de chaque application.

Ce compromis ne peut résoudre toutes les contradictions et certaines fonctions sont alors dégradées en terme de performance.

Par ailleurs, certaines fonctions trouvent aujourd'hui des solutions par l'utilisation de capteurs spécifiques (exemple : l'application *front side view* réalisée par une *front corner camera*).

Toujours dans un souci de réduction des coûts, il est judicieux de proposer des solutions pour ce type d'application qui utiliserait des capteurs existants, c'est-à-dire réalisant déjà d'autres fonctions dans le véhicule.

Enfin, certaines fonctions ne trouvent aujourd'hui pas encore de solutions techniques ou présentent des faiblesses qui peuvent être améliorées.

La présente invention vise notamment à répondre aux différents besoins décrits ci-dessus, par exemple en communalisant plusieurs équipements du véhicule.

On connaît par ailleurs par la demande de brevet FR 2 899 967 un projecteur monté rotatif autour d'un axe vertical, par le document DE 199 50 033 une caméra capable de filmer en continu une route avec la meilleure résolution possible et par le document JP 2005 088630 un système de vision nocturne comportant une caméra infrarouge munie d'un moteur.

L'invention a notamment pour objet un procédé de détection pour un véhicule automobile comportant un projecteur capable d'émettre un faisceau lumineux modifiable en orientation afin de suivre un virage et au moins une caméra ayant un champ de vision prédéterminé, le projecteur étant associé à un dispositif DBL pour faire déplacer le faisceau lors d'un virage, et la caméra étant liée à ce dispositif DBL, en étant par exemple montée sur ce dispositif DBL ou étant en lien physique avec ce dispositif DBL, ce procédé utilisant au moins une caméra ayant un champ de vision, ce procédé comportant les étapes suivantes :
- recevoir une information représentative d'un état de conduite associé au véhicule,
- modifier, de préférence automatiquement, le champ de vision de la caméra, notamment son orientation, en fonction de ladite information, le procédé étant caractérisé par le fait que l'orientation du champ de vision de la caméra est modifiée en fonction de la modification de l'orientation du faisceau dudit projecteur et par le fait que la caméra est mobile de manière concomitante à un déplacement du projecteur.

Le champ de vision de la caméra peut être formé par l'angle solide (ou cône de perception) défini par l'orientation d'un axe optique de la caméra et son angle de vue.

Le champ de vision définit notamment l'espace objet de la caméra, c'est-à-dire la zone de perception de la caméra.

La base de l'angle solide peut être par exemple rectangulaire.

Dans un exemple de mise en oeuvre de l'invention, l'information représentative d'un état de conduite associé au véhicule est choisi parmi : une information de virage du véhicule, une information sur le type d'environnement du véhicule (ce type d'environnement pouvant par exemple être urbain, à savoir le véhicule est dans une ville, ou rural, à savoir le véhicule est dans la campagne), une information de conditions climatiques ou de luminosité, une information de commande d'un feu clignotant du véhicule.

Le cas échéant, l'information représentative d'un état de conduite associé au véhicule est une information de virage du véhicule choisie parmi un angle au volant du véhicule, ou des données de localisation du véhicule telles que des données GPS.

Avantageusement, le véhicule comporte un projecteur capable d'émettre un faisceau lumineux modifiable en orientation afin de suivre un virage, et l'orientation du champ de vision de la caméra est modifiée en fonction de la modification de l'orientation du faisceau dudit projecteur lors d'un virage.

Si on le souhaite, la caméra est mobile de manière concomitante à un déplacement du projecteur, ce déplacement étant par exemple un pivotement.

Le projecteur peut être associé à un dispositif DBL pour faire déplacer le faisceau lors d'un virage, et la caméra peut être liée à ce dispositif DBL, en étant par exemple montée sur ce dispositif DBL ou étant en lien physique avec ce dispositif DBL.

Dans un exemple de mise en oeuvre de l'invention, la caméra est montée sur une plateforme indépendante des projecteurs du véhicule, cette plateforme étant agencée pour permettre un mouvement de la caméra par rapport au véhicule. Cette plate-forme est par exemple fixée au pare-brise du véhicule.

Le cas échéant, l'information représentative d'un état de conduite associé au véhicule est une information de vitesse du véhicule, ou une information sur la luminosité ambiante.

Avantageusement le champ de vision de la caméra est modifié, notamment son orientation, lorsque la vitesse du véhicule est en dessous d'un seuil prédéterminé, notamment en vue d'élargir la visibilité sur au moins un côté de la route.

Par exemple, au moins deux caméras sont prévues et, lorsque la vitesse du véhicule est en dessous d'un seuil prédéterminé, l'orientation des caméras est modifiée afin que les champs de vision respectifs s'écartent l'un de l'autre pour élargir la visibilité des deux côtés du véhicule.

Le cas échéant, le champ de vision de la caméra est modifié lorsque les informations de localisation du véhicule indique la présence d'un environnement urbain complexe autour du véhicule, notamment en vue d'élargir la visibilité sur au moins un côté de la route

Si on le souhaite, le débattement angulaire autorisé de la caméra est compris entre 0 et 15°, ou entre 0 et 30°.

L'invention a également pour objet un dispositif de détection pour un véhicule automobile, ce dispositif comportant au moins une caméra ayant un champ de vision, ce dispositif étant agencé pour :
- recevoir une information représentative d'un état de conduite associé au véhicule,
- modifier le champ de vision de la caméra, notamment son orientation, en fonction de ladite information, le dispositif comporte un dispositif DBL associé à un projecteur du véhicule pour faire déplacer le faisceau lors d'un virage, la caméra étant couplée cinématiquement au dispositif DBL en étant liée à ce dispositif DBL, en étant par exemple montée sur ce dispositif DBL ou étant en lien physique avec ce dispositif DBL.

L'invention pourra être mieux comprise à la lecture de la description détaillée qui va suivre, d'exemples de mise en oeuvre non limitatifs de l'invention, et à l'examen du dessin annexé, sur lequel :
- la figure 1A représente, schématiquement et partiellement, la situation sur une route d'un véhicule équipé d'une caméra selon l'état de la technique, sans projecteur rotatif,
- la figure 1B représente, schématiquement et partiellement, la situation sur une route d'un véhicule équipé d'une caméra selon l'état de la technique, avec projecteurs rotatifs ou DBL,
- la figure 1C représente, schématiquement et partiellement, la situation sur une route d'un véhicule équipé d'un dispositif de détection selon l'invention, avec projecteurs rotatifs ou DBL,
- les figures 2 et 3 représentent, schématiquement et partiellement, en perspective, des dispositifs selon deux exemples de mise en oeuvre de l'invention, et
- la figure 4 représente, schématiquement et partiellement, une situation sur une route urbaine d'un véhicule équipé d'un dispositif selon un autre exemple de mise en oeuvre de l'invention.

### Contexte de nuit

Il est connu une application spécifique à la nuit qui est l'automatisation de l'éclairage, à savoir une application qui permet de basculer du feu de croisement au feu de route ou vice-versa, en fonction de véhicules arrivant potentiellement en face, lesquels véhicules sont détectés automatiquement par une caméra.

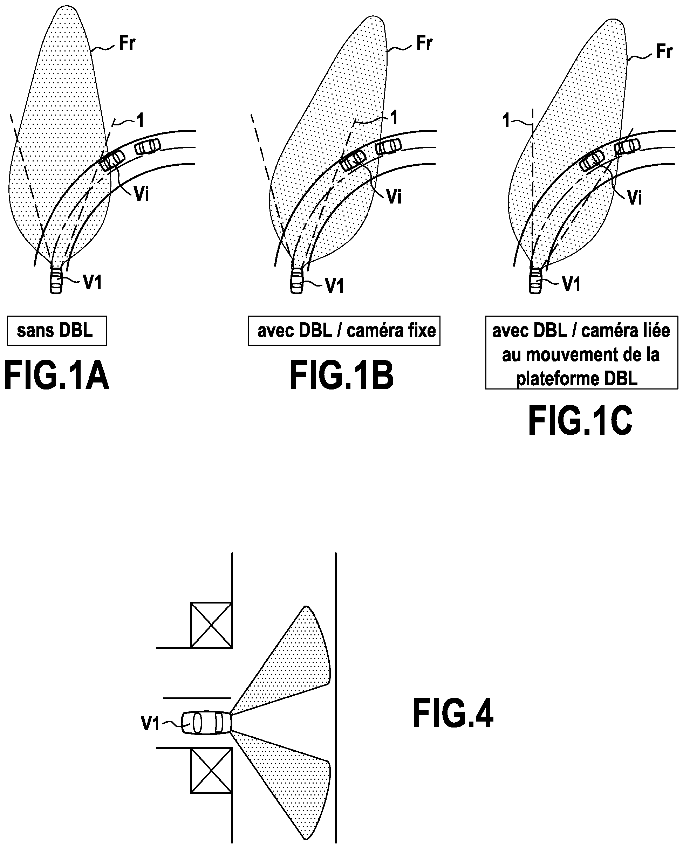

Dans certains cas de virages très serrés, il a été montré que des véhicules Vi croisant le véhicule V1 équipé de la fonction automatisation d'éclairage peuvent se trouver dans le faisceau de route Fr des projecteurs de V1 et ne pas être dans le champ de vue 1 de la caméra 40 pendant un très court laps de temps (voir Figure 1A).

Les véhicules Vi sont en situation d'éblouissement potentiel, situation renforcée par l'action d'un dispositif DBL (DBL pour « Dynamic Bending Light » en anglais), comme illustré sur la figure 1B.

Dans cet exemple de la figure 1B, la caméra est fixe, à savoir ne peut pas pivoter par rapport au véhicule.

Le dispositif DBL dans un projecteur de véhicule automobile permet de faire pivoter un module optique à l'intérieur du projecteur.

Le module optique peut être du type à feux de croisement et est apte à pivoter selon la trajectoire suivie par le véhicule, notamment en cas de prise d'un virage pour obtenir une fonction dite « code virage » ou DBL.

En liant le mouvement de la camera à celui du dispositif DBL, on réduit ce risque d'éblouissement (comme illustré sur la figure 1 C).

Selon l'ensemble des fonctions présentes dans le véhicule V1, et de manière non limitative, une seule camera se situe dans le projecteur côté passager ou côté conducteur, ou bien deux caméras sont placées chacune dans un projecteur ou bien encore la caméra est placée en haut du pare-brise, sur une plate-forme.

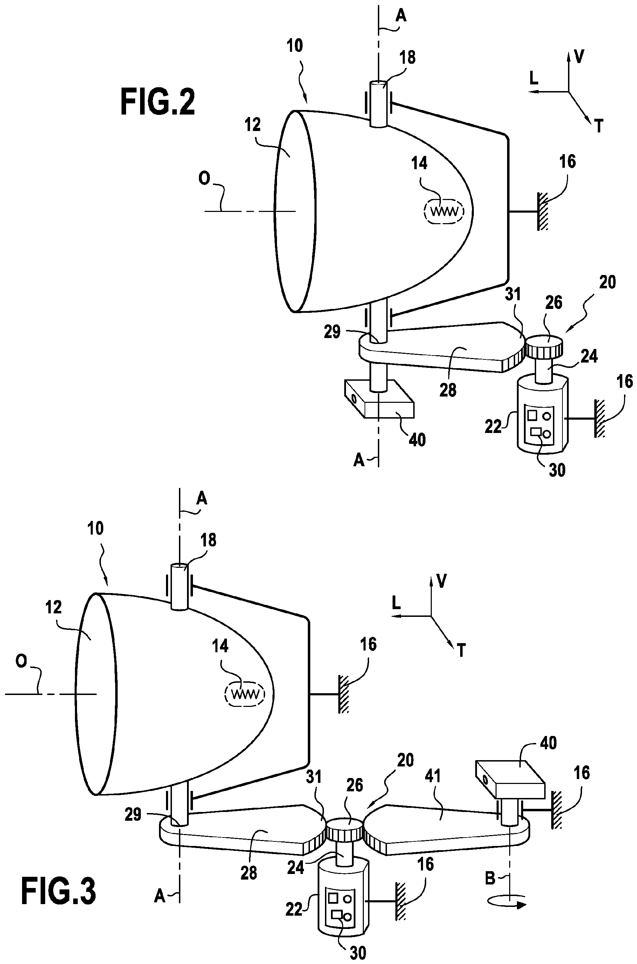

Dans le cas d'une ou plusieurs caméras placées dans les projecteurs, les caméras peuvent être montées directement sur le dispositif DBL ou bien en lien physique avec ce dispositif, comme on verra plus en détail par la suite en référence aux figures 2 et 3.

Dans le cas d'une caméra en haut du pare-brise, le mouvement de la caméra est créé par une autre plateforme qui reprend des informations du dispositif DBL ou directement des informations d'angle au volant qui pilotent le dispositif DBL.

D'une manière générale, toutes les informations nécessaires au pilotage du mouvement du dispositif DBL ainsi que les lois qui les régissent peuvent être reprises par cette plateforme.

De façon à réduire les coûts, on peut privilégier l'implantation dans le ou les projecteurs de façon à bénéficier des plateformes de mouvement mécaniques existantes.

Pour la suite de la description, on adoptera à titre non limitatif une orientation longitudinale, verticale et transversale qui est fixe par rapport à la caisse du véhicule automobile et qui est indiquée par le trièdre "L,V,T" de la figure 2.

On a représenté à la figure 2 un projecteur 10 de véhicule automobile qui comporte ici un réflecteur 12 à l'intérieur duquel est montée une lampe 14. Le projecteur 10 est susceptible d'émettre un faisceau lumineux selon un axe optique "O" d'orientation globalement longitudinale.

Le réflecteur 12 et la lampe 14 forment un module optique 15.

Le module 15 est monté à rotation autour d'un axe vertical "A" par rapport à la caisse 16 du véhicule automobile. A cet effet, le projecteur 10 comporte par exemple deux tourillons 18 inférieur et supérieur d'axe "A".

Le faisceau du projecteur 10 est ainsi susceptible d'être orienté selon plusieurs positions angulaires autour de l'axe "A" dans un intervalle de débattement qui est délimité par deux positions angulaires extrêmes.

Pour la suite de la description, on définit une position angulaire neutre qui correspond à la position angulaire que le projecteur 10 occupe lorsqu'il éclaire la route selon l'axe longitudinal "L" du véhicule.

La position angulaire neutre occupe une position médiane dans l'intervalle de débattement.

Ainsi, l'axe optique "O" du faisceau du projecteur 10 est susceptible de pivoter de part et d'autre de l'axe longitudinal "L" du véhicule automobile.

Le projecteur 10 est entraîné en rotation par un dispositif d'entraînement DBL 20 qui comporte ici un moteur électrique 22, par exemple un moteur pas à pas, qui comporte un arbre vertical rotatif 24. Le moteur 22 est monté fixe par rapport à la caisse du véhicule automobile 16. Un pignon 26 est agencé à une extrémité supérieure libre de l'arbre 24.

Le dispositif d'entraînement DBL 20 comporte aussi un secteur circulaire denté 28 qui s'étend dans un plan horizontal en éventail depuis un sommet 29 jusqu'à un arc périphérique denté 31, le sommet 29 formant le centre de l'arc périphérique 31.

Le sommet 29 du secteur denté 28 est monté à rotation autour de l'axe "A" de manière que le secteur denté 28 soit solidaire en rotation avec le projecteur 10. Les dents 31 du secteur denté 28 sont engrenées avec les dents du pignon 26 de manière que le moteur 22 soit susceptible d'entraîner le projecteur 10 en rotation par l'intermédiaire du secteur denté 28.

Le dispositif d'entraînement DBL 20 comporte éventuellement aussi une carte à circuit imprimé 30 qui s'étend dans un plan vertical transversal et qui est ici fixée au moteur 22.

Le dispositif d'entraînement 20 comporte, si on le souhaite, au moins deux capteurs à effet Hall qui sont agencés sur la carte à circuit imprimé 30.

Pour le rôle des capteurs permettant de mesurer la position angulaire du faisceau du projecteur dans son intervalle de débattement, il est possible de se référer à la demande de brevet FR 2 899 967.

Dans l'exemple de la figure 2, la caméra 40 est placée dans le projecteur 10, étant montée directement sur le dispositif DBL 20, par exemple solidairement à l'axe de pivotement A du module d'éclairage.

En variante, comme illustré sur la figure 3, la caméra 40 est placée dans le projecteur 10, étant liée physiquement avec le dispositif DBL 40, par exemple .par l'intermédiaire d'un secteur dentée 41 rotatif autour d'un axe B, par exemple parallèle à l'axe A.

### Ville / Basse Vitesse

Dans le cadre d'une conduite en ville de jour comme de nuit, les caméras couplées au dispositif DBL peuvent également être utilisées afin d'améliorer la visibilité à basse vitesse lors des croisements. En effet à l'abord d'un carrefour étroit, il est fréquent en ville de ne pas avoir de visibilité à droite et/ou à gauche. Dans le cas par exemple de conduite sur une route étroite en ville, les bâtiments se trouvant à droite ou à gauche de la route peuvent rendre la visibilité difficile aux abords d'un croisement, comme le montre la figure 4.

L'invention propose ainsi d'orienter les caméras 40, notamment dans les projecteurs de droite et de gauche, grâce au dispositif DBL afin d'élargir la visibilité des deux cotés du croisement.

Dès que le véhicule est en ville à basse vitesse (information disponible dans le véhicule, soit une information de vitesse soit une information GPS par exemple), les dispositifs DBL peuvent être automatiquement orientés vers l'extérieur afin d'élargir le champ de visibilité. En ville, à basse vitesse, le besoin en éclairage étant moins important que sur route en campagne (du fait de l'éclairage extérieur), le fait d'écarter les faisceaux lumineux ne cause pas de gêne.

Bien évidemment, ce dispositif, afin d'être plus efficace, nécessite la mise en place d'une interface machine permettant d'informer le conducteur de la présence d'un obstacle ou d'un véhicule. Un écran de visualisation dans le véhicule peut être une interface appropriée pour restituer cette information au conducteur. Les deux images (caméras de gauche et de droite) peuvent être couplées sur le même écran.

La caméra est avantageusement liée au mouvement du dispositif DBL afin de suivre le faisceau de nuit, ou bien afin d'élargir la couverture de visibilité des caméras de jour.

Les fonctions de nuit et de jour peuvent être rendues compatibles.

Bien entendu, l'invention n'est pas limitée aux exemples de mise en oeuvre qui viennent d'être décrits.

Par exemple, la mobilité du faisceau lumineux peut être assurée par l'utilisation d'un dispositif FBL (pour '*Fix Bending Light'*).

Dans ce cas, il n'y a pas de mouvement propre du projecteur.

De manière non limitative, le faisceau peut être modifié dans son orientation et dans sa forme par l'activation ou la désactivation successives de différentes sources lumineuses (qui peuvent être par exemple des LEDs) ou bien encore par un mouvement interne au projecteur (par exemple mouvement d'un cache mobile à l'intérieur du projecteur).

Dans ce cas, le mouvement de la caméra peut être piloté par des informations d'activation du FBL (par exemple, une information d'angle au volant ou des données GPS).

## Revendications

1. Procédé de détection pour un véhicule automobile (V1) comportant un projecteur (10) capable d'émettre un faisceau lumineux modifiable en orientation afin de suivre un virage et au moins une caméra (40) ayant un champ de vision (1) prédéterminé, le projecteur étant associé à un dispositif DBL (20) pour faire déplacer le faisceau lors d'un virage, et la caméra (40) étant liée à ce dispositif DBL, en étant par exemple montée sur ce dispositif DBL (20) ou étant en lien physique avec ce dispositif DBL, ce procédé comportant les étapes suivantes :
- recevoir une information représentative d'un état de conduite associé au véhicule,
- modifier le champ de vision (1) de la caméra (40), notamment son orientation, en fonction de ladite information le procédé étant **caractérisé par le fait que** l'orientation du champ de vision (1) de la caméra est modifiée en fonction de la modification de l'orientation du faisceau (Fr) dudit projecteur (10) et **par le fait que** la caméra (40) est mobile de manière concomitante à un déplacement du projecteur (10).

2. Procédé selon la revendication précédente, **caractérisé par le fait que** l'information représentative d'un état de conduite associé au véhicule est choisi parmi : une information de virage du véhicule, une information sur l'environnement du véhicule, une information de commande d'un feu clignotant du véhicule.

3. Procédé selon l'une des revendications précédentes, **caractérisé par le fait que** l'information représentative d'un état de conduite associé au véhicule est une information de virage du véhicule choisie parmi un angle au volant du véhicule, ou des données de localisation du véhicule telles que des données GPS.

4. Procédé selon l'une des revendications précédentes, **caractérisé par le fait que** l'information représentative d'un état de conduite associé au véhicule est une information de vitesse du véhicule, une information sur la luminosité ambiante, ou une information de localisation du véhicule telle que des données de navigation.

5. Procédé selon la revendication précédente, **caractérisé par le fait que** le champ de vision de la caméra est modifié lorsque la vitesse du véhicule est en dessous d'un seuil prédéterminé, notamment en vue d'élargir la visibilité sur au moins un côté de la route.

6. Procédé selon la revendication précédente, **caractérisé par le fait que** au moins deux caméras sont prévues et, lorsque la vitesse du véhicule est en dessous d'un seuil prédéterminé, l'orientation des caméras est modifiée afin que les champs de visions respectifs s'écartent l'un de l'autre pour élargir la visibilité des deux côtés du véhicule.

7. Procédé selon l'une quelconque des revendications précédentes, **caractérisé par le fait que** le champ de vision de la caméra est modifié lorsque les informations de localisation du véhicule indique la présence d'un environnement urbain complexe autour du véhicule, notamment en vue d'élargir la visibilité sur au moins un côté de la route.

8. Procédé selon l'une des revendications précédentes, **caractérisé par le fait que** le débattement angulaire de la caméra est compris entre 0 et 15°, ou entre 0 et 30°.

9. Dispositif de détection pour un véhicule (V1) automobile, ce dispositif comportant au moins un dispositif DBL (20) associé à un projecteur (10) du véhicule pour faire déplacer un faisceau lumineux modifiable en orientation afin de suivre un virage et une caméra (40) ayant un champ de vision (1) prédéterminé, ce dispositif étant agencé pour:
- recevoir une information représentative d'un état de conduite associé au véhicule,
- modifier le champ de vision (1) de la caméra (40), notamment son orientation, en fonction de ladite information,
le dispositif étant **caractérisé par le fait que** la caméra (40) est mobile de manière concomitante à un déplacement du projecteur (10) en étant couplée cinématiquement au dispositif DBL (20) en étant liée à ce dispositif DBL, en étant par exemple montée sur ce dispositif DBL ou étant en lien physique avec ce dispositif DBL.

## Patentansprüche

1. Erkennungsverfahren für ein Kraftfahrzeug (V1), umfassend einen Projektor (10), der geeignet ist, einen in der Ausrichtung veränderbaren Lichtstrahl zu entsenden, um einer Kurve zu folgen, und mindestens eine Kamera (40) mit einem vorbestimmten Sichtfeld (1), wobei der Projektor einer DBL-Vorrichtung (20) zugeordnet ist, um den Strahl bei einer Kurve zu bewegen, und wobei die Kamera (40) mit dieser DBL-Vorrichtung verbunden ist, wobei sie beispielsweise auf dieser DBL-Vorrichtung (20) montiert ist, oder wobei sie mit dieser DBL-Vorrichtung in physischer Verbindung steht, wobei dieses Verfahren die folgenden Schritte umfasst:
- Empfang einer Information, die für einen dem Fahrzeug zugeordneten Fahrzustand repräsentativ ist,
- Änderung des Sichtfeldes (1) der Kamera (40), insbesondere ihrer Ausrichtung, in Abhängigkeit von der Information,
wobei das Verfahren **dadurch gekennzeichnet ist, dass** die Ausrichtung des Sichtfeldes (1) der Kamera in Abhängigkeit von der Änderung der Ausrichtung des Strahls (Fr) des Projektors (10) verändert wird, und dadurch, dass die Kamera (40) begleitend zu einer Bewegung des Projektors (10) beweglich ist.

2. Verfahren nach dem vorhergehenden Anspruch, **dadurch gekennzeichnet, dass** die Information, die für einen dem Fahrzeug zugeordneten Fahrzustand repräsentativ ist, ausgewählt ist unter: einer Kurveninformation des Fahrzeugs, einer Information über die Umgebung des Fahrzeugs, einer Steuerinformation eines Blinklichts des Fahrzeugs.

3. Verfahren nach einem der vorhergehenden Ansprüche, **dadurch gekennzeichnet, dass** die Information, die für einen dem Fahrzeug zugeordneten Fahrzustand repräsentativ ist, eine Kurveninformation des Fahrzeugs ist, die unter einem Winkel am Lenkrad des Fahrzeugs oder Lokalisierungsdaten des Fahrzeugs, wie GPS-Daten, ausgewählt ist.

4. Verfahren nach einem der vorhergehenden Ansprüche, **dadurch gekennzeichnet, dass** die Information, die für einen dem Fahrzeug zugeordneten Fahrzustand repräsentativ ist, eine Geschwindigkeitsinformation des Fahrzeugs, eine Information über die Umgebungshelligkeit oder eine Lokalisierungsinformation des Fahrzeugs, wie Navigationsdaten, ist.

5. Verfahren nach dem vorhergehenden Anspruch, **dadurch gekennzeichnet, dass** das Sichtfeld der Kamera verändert wird, wenn die Geschwindigkeit des Fahrzeugs unter einer vorbestimmten Grenze liegt, insbesondere um die Sichtverhältnisse auf mindestens einer Seite der Straße zu erweitern.

6. Verfahren nach dem vorhergehenden Anspruch, **dadurch gekennzeichnet, dass** mindestens zwei Kameras vorgesehen sind, und dass, wenn die Geschwindigkeit des Fahrzeugs unter einer vorbestimmten Grenze liegt, die Ausrichtung der Kameras verändert wird, damit sich die jeweiligen Sichtfelder voneinander entfernen, um die Sichtverhältnisse auf beiden Seiten des Fahrzeugs zu erweitern.

7. Verfahren nach einem der vorhergehenden Ansprüche, **dadurch gekennzeichnet, dass** das Sichtfeld der Kamera verändert wird, wenn die Lokalisierungsinformationen des Fahrzeugs das Vorhandensein einer komplexen urbanen Umgebung um das Fahrzeug anzeigen, insbesondere um die Sichtverhältnisse auf mindestens einer Seite der Straße zu erweitern.

8. Verfahren nach einem der vorhergehenden Ansprüche, **dadurch gekennzeichnet, dass** der Winkelausschlag der Kamera zwischen 0 und 15° oder zwischen 0 und 30° beträgt.

9. Erkennungsvorrichtung für ein Kraftfahrzeug (V1), wobei diese Vorrichtung mindestens eine DBL-Vorrichtung (20), die einem Projektor (10) des Fahrzeugs zugeordnet ist, um einen in der Ausrichtung veränderbaren Lichtstrahl zu bewegen, um einer Kurve zu folgen, und eine Kamera (40) mit einem vorbestimmten Sichtfeld (1) umfasst, wobei diese Vorrichtung dazu vorgesehen ist:
- eine Information zu empfangen, die für einen dem Fahrzeug zugeordneten Fahrzustand repräsentativ ist,
- das Sichtfeld (1) der Kamera (40), insbesondere ihre Ausrichtung, in Abhängigkeit von der Information zu verändern,
wobei die Vorrichtung **dadurch gekennzeichnet ist, dass** die Kamera (40) begleitend mit einer Bewegung des Projektors (10) beweglich ist, wobei sie kinematisch mit der DBL-Vorrichtung (20) gekoppelt ist, wobei sie beispielsweise auf dieser DBL-Vorrichtung montiert ist, oder wobei sie physisch mit dieser DBL-Vorrichtung verbunden ist.

## Claims

1. Detection method for a motor vehicle (V1) comprising a headlight (10) capable of emitting a light beam that can be modified in orientation in order to follow a turn and at least one camera (40) having a predetermined field of view (1), the headlight being associated with a device DBL (20) for moving the beam during a turn, and the camera (40) being linked to this device DBL, by being for example mounted on this device DBL (20) or being physically linked with this device DBL, this method comprising the following steps:
- receiving information representative of a driving state associated with the vehicle,
- modifying the field of view (1) of the camera (40), notably its orientation, according to said information
the method being **characterized in that** the orientation of the field of view (1) of the camera is modified according to the modification of the orientation of the beam (Fr) of said headlight (10) and **in that** the camera (40) is mobile concomitantly with a movement of the headlight (10).

2. Method according to the preceding claim, **characterized in that** the information representative of a driving state associated with the vehicle is chosen from: vehicle turn information, vehicle environment information, vehicle indicator light control information.

3. Method according to one of the preceding claims, **characterized in that** the information representative of a driving state associated with the vehicle is vehicle turn information chosen from a vehicle steering wheel angle, or vehicle location data such as GPS data.

4. Method according to one of the preceding claims, **characterized in that** the information representative of a driving state associated with the vehicle is vehicle speed information, information on ambient brightness, or vehicle location information such as navigation data.

5. Method according to the preceding claim, **characterized in that** the field of view of the camera is modified when the speed of the vehicle is below a predetermined threshold, notably in order to widen the visibility on at least one side of the road.

6. Method according to the preceding claim, **characterized in that** at least two cameras are provided and, when the speed of the vehicle is below a predetermined threshold, the orientation of the cameras is modified in order for the respective fields of view to move away from one another to widen the visibility on both sides of the vehicle.

7. Method according to any one of the preceding claims, **characterized in that** the field of view of the camera is modified when the vehicle location information indicates the presence of a complex urban environment around the vehicle, notably in order to widen the visibility on at least one side of the road.

8. Method according to one of the preceding claims, **characterized in that** the angular travel of the camera lies between 0 and 15°, or between 0 and 30°.

9. Detection device for a motor vehicle (V1), this device comprising at least one device DBL (20) associated with a headlight (10) of the vehicle to move a light beam that can be modified in orientation in order to follow a turn and a camera (40) having a predetermined field of view (1), this device being arranged to:
- receive information representative of a driving state associated with the vehicle,
- modify the field of view (1) of the camera (40), notably its orientation, according to said information,
the device being **characterized in that** the camera (40) is mobile concomitantly with the movement of the headlight (10) by being coupled cinematically to the device DBL (20) and being linked to this device DBL, by being for example mounted on this device DBL or being physically linked with this device DBL.
